# EUROPEAN PATENT APPLICATION

(11) **EP 2 606 970 A1**
(43) Date of publication of application: **26.06.2013**
(21) Application number: 11194176.1
(22) Date of filing: 19.12.2011
(51) Int. Cl.: B01J 31/18, C07F 17/00, C08F 4/69, C08F 10/00

(54) **Monocyclopentadienyl binuclear complexes, ligands used in their preparaion, catalyst systems comprising them and olefin polymerisation process**

(71) Applicant: Basell Polyolefine GmbH, 50389 Wesseling (DE)
(72) Inventor: Richter-Lukesova, Lenka, 65719 Hofheim (DE); Mihan, Shahram, 65812 Bad Soden (DE); Fantinel, Fabiana, 37122 Verona (IT); Nifant'ev, Ilya Eduardovich, 117526 Moscow (RU)
(74) Representative: Sacco, Marco

(57) **Abstract**

A complex of formula (I)

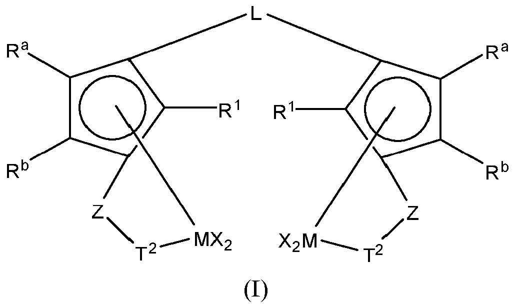

wherein R¹ is a hydrogen atom or C₁-C₄₀ hydrocarbon radical R^{a} and R^{b} equal to or different from each other, are hydrogen atoms or C₁-C₄₀ hydrocarbon radical or R^{a} and R^{b} can be joined to form a from 4 to 7 membered ring, M is selected from titanium, zirconium, hafnium, vanadium, niobium, tantalum, chromium, molybdenum or tungsten; X, equal to or different from each other, are a hydrogen atom, a halogen atom, a R, OR, OSO₂CF₃, OCOR, SR, NR₂ or PR₂ group where R is as defined in the claims; Z is a divalent bridging group; T² is a radical comprising at least one uncharged donor containing at least one atom of group 15 or 16 of the Periodic Table; L is a divalent bridging group. The invention also relates to a catalyst system comprising complex (I), an alumoxane or a compound capable of forming an alkyl metallocene cation, and optionally an oranoaluminium compound. The catalyst system is employed in the polymerisation of one or more α-olefins. The ligands making up the complex (I) are also claimed.

## Description

The present invention relates to monocyclopentadienyl binuclear complex wherein the II ligands have a particular substitution pattern.

Monocyclopentadienyl complexes are already known in the art. For example DE 197 10615 5 describes monocyclopentadienylchromium compounds substituted by donor ligands which can be used for the polymerization of both ethene and propene. The donor is in this case from group 15 and uncharged. The donor is bound to the cyclopentadienyl ring via a (ZR₂)ₙ fragment, where R is hydrogen, alkyl or aryl, Z is an atom of group 14 and n is 1.

WO 96/13529 describes reduced transition metal complexes of elements of groups 4 to 6 of the Periodic Table with polydentate monoanionic ligands. These also include cyclopentadienyl ligands containing a donor function. The examples are restricted to titanium compounds. WO2006/063826 relates to a particular class of monocyclopentadienyl complexes wherein the cyclopentadienyl comprises as substituent at least one uncharged donor containing at least one atom of group 15 or 16 of the Periodic Table.

The applicant unexpectedly found that the polymerization activity of the monocyclopentadienyl complexes can be further improved by using binuclear complexes bound by a bridge.

An object of the present invention is a complex of formula (I) 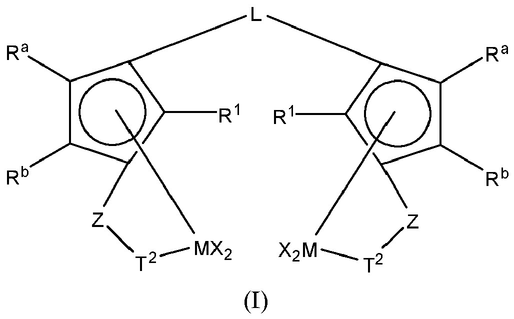 Wherein
R¹, equal to or different from each other, is a hydrogen atom or C₁-C₄₀ hydrocarbon radical optionally containing silicon atoms, germanium atoms or heteroatoms belonging to groups 15-16 of the Periodic Table of the Elements; preferably R¹ is hydrogen atom, or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radical, optionally containing heteroatoms belonging to groups 13-17 of the Periodic Table of the Elements; more preferably R¹ is a C₁-C₁₀-alkyl radical such as methyl, ethyl, isopropyl;
R^{a} and R^{b}, equal to or different from each other, are hydrogen atoms or C₁-C₄₀ hydrocarbon radicals optionally containing silicon atoms, germanium atoms or heteroatoms belonging to groups 15-16 of the Periodic Table of the Elements or R^{a} and R^{b} can be joined to form a from 4 to 7 membered ring, preferably a 5-6 membered ring that can be aliphatic or aromatic and can contain heteroatoms belonging to groups 15-16 of the Periodic Table of the Elements; said ring can contain one or more C₁-C₂₀ hydrocarbon radicals as substituents; preferably R^{a} and R^{b} are hydrogen atoms, or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing heteroatoms belonging to groups 13-17 of the Periodic Table of the Elements; or R^{a} and R^{b}, can be joined to form a from 4 to 7 membered ring, preferably a 5-6 membered ring that can be aliphatic or aromatic and can contain heteroatoms belonging to groups 15-16 of the Periodic Table of the Elements; said ring can contain one or more C₁-C₂₀ hydrocarbon radicals as substituents;
M is selected from titanium, zirconium, hafnium, vanadium, niobium, tantalum, chromium, molybdenum or tungsten; preferably M is selected from zirconium, hafnium, titanium or chromium; more preferably M is chromium;
X, equal to or different from each other, are a hydrogen atom, a halogen atom, a R, OR, OSO₂CF₃, OCOR, SR, NR₂ or PR₂ group wherein R is a linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical; optionally containing heteroatoms belonging to groups 13-17 of the Periodic Table of the Elements; or two X groups can be joined together to form a group OR'O wherein R' is a C₁-C₂₀-alkylidene, C₆-C₂₀-arylidene, C₇-C₂₀-alkylarylidene, or C₇-C₂₀-arylalkylidene radical; preferably X is a hydrogen atom, a halogen atom or R group; more preferably X is chlorine or a methyl radical;
Z is a divalent bridging group selected from C₁-C₂₀ alkylidene, C₃-C₂₀ cycloalkylidene, C₆-C₂₀ arylidene, C₇-C₂₀ alkylarylidene, or a C₇-C₂₀ arylalkylidene radicals, optionally containing heteroatoms belonging to groups 13-17 of the Periodic Table of the Elements, or it is a silylidene radical containing up to 5 silicon atoms; Z can also be an aliphatic or aromatic 5-7 membered ring condensed with T² to form for example with T² a quinoline moiety; preferably the ring is a C₆ ring;
Z is preferably a Si(R⁶)₂ group, a C(R⁶)₂ or a C(R⁶)₂-C(R⁶)₂ group, wherein R⁶, equal to or different from each other are hydrogen atoms, or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing heteroatoms belonging to groups 13-17 of the Periodic Table of the Elements; or two R⁶ can also be joined to form a from 4 to 7 membered ring; preferably R6 is a C₁-C₁₀-alkyl radical such as methyl, ethyl, n propyl, isopropyl radical;
T² is a moiety comprising at least one uncharged donor containing at least one atom of group 15 or 16 of the Periodic Table;
   preferably T² contains sulphur phosphorous, oxygen or nitrogen atoms; more preferably T² has formula (IIa) or (IIb);

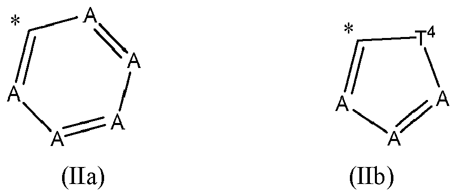

Wherein the asterisk (*) marks the position in which the bridge Z is bound; when the bridge Z is a condensed saturated or unsaturated ring the other position in which Z is bound is the position vicinal to the position marked with the asterisk (*); A is a C(R⁷) group or a T³ atom, wherein R⁷ equal to or different from each other, are hydrogen atoms or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing heteroatoms belonging to groups 13-17 of the Periodic Table of the Elements; or two R⁷ can also be joined to form a from 4 to 7 membered ring; T³ is a nitrogen or a phosphorous atom, preferably a nitrogen atom; T⁴ is suplphur, oxygen, or a NR⁷ group; with the proviso that non more than two A groups are T³ groups; preferably in formula (IIa) only one A group is a T3 group and In formula (IIb) all A groups are C(R⁷).

L is a divalent bridging group selected from C₁-C₄₀ alkylidene, C₃-C₄₀ cycloalkylidene, C₆-C₄₀ arylidene, C₇-C₄₀ alkylarylidene, or a C₇-C₄₀ arylalkylidene radicals, optionally containing heteroatoms belonging to groups 13-17 of the Periodic Table of the Elements, preferably silicon; or it is a silylidene radical containing up to 5 silicon atoms; preferably L has formula (III): 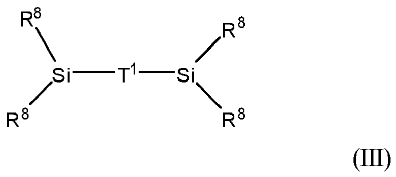 Wherein:
R⁸, equal to or different from each other, are hydrogen atoms or C₁-C₁₀ hydrocarbon radical; preferably R⁸ are hydrogen atoms, or linear or branched, saturated or unsaturated C₁-C₁₀-alkyl, C₃-C₂₀-cycloalkyl, C₆-C₂₀-aryl, C₇-C₂₀-alkylaryl or C₇-C₂₀-arylalkyl radicals, optionally containing heteroatoms belonging to groups 13-17 of the Periodic Table of the Elements; more preferably R⁸ are C₁-C₁₀-alkyl radicals such as methyl, ethyl, isopropyl;
T¹ is a divalent bridging group selected from C₁-C₂₀ alkylidene; C₃-C₂₀ cycloalkylidene, C₆-C₂₀ arylidene, C₇-C₂₀ alkylarylidene, or a C₇-C₂₀ arylalkylidene radical; preferably T¹ is C₁-C₁₅ alkylidene radical; more prerably T¹ is C₄-C₁₀ alkylidene radical such as linear C₄, C₆, C₈, C₁₀ alkylidene radical.

Preferably the complex of formula (I) has formula (IV): 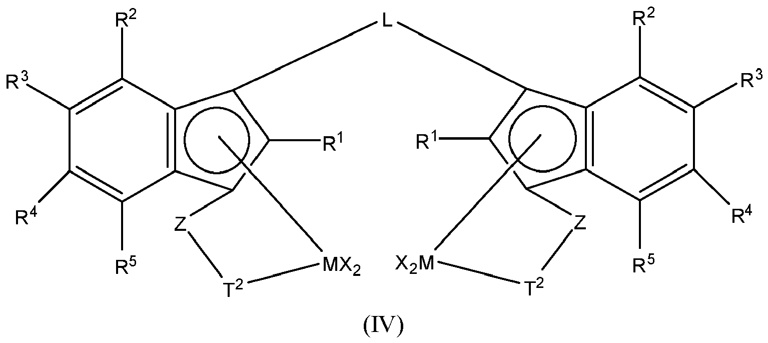 Wherein:
M, X, R¹, Z. L and T² have been described above;
R², R³, R⁴ and R⁵, equal to or different from each other, are hydrogen atoms or C₁-C₄₀ hydrocarbon radical optionally containing silicon atoms, germanium atoms or heteroatoms belonging to groups 15-16 of the Periodic Table of the Elements or two groups among R², R³, R⁴ and R⁵ can also be joined to form a from 4 to 7 membered ring, preferably a 5-6 membered ring that can be aliphatic or aromatic and can contain silicon atoms, Germanium atoms or heteroatoms belonging to groups 15-16 of the Periodic Table of the Elements; said ring can contain one or more C₁-C₁₀ hydrocarbon radicals as substituents; preferably R², R³, R⁴ and R⁵ are hydrogen atoms, or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing heteroatoms belonging to groups 13-17 of the Periodic Table of the Elements; or two groups among R², R³, R⁴ and R⁵ can also be joined to form a from 4 to 7 membered ring, preferably a 5-6 membered ring that can be aliphatic or aromatic and can contain silicon atoms, Germanium atoms or heteroatoms belonging to groups 15-16 of the Periodic Table of the Elements; said ring can contain one or more C₁-C₁₀ hydrocarbon radicals as substituents;

Preferably R², R³, R⁴ and R⁵, equal to or different from each other, are hydrogen atoms or C₁-C₁₀-alkyl, C₆-C₁₀-aryl, C₇-C₁₅-alkylaryl or C₇-C₁₅-arylalkyl radicals.

Preferably the compound of formula (I) has formula (V); 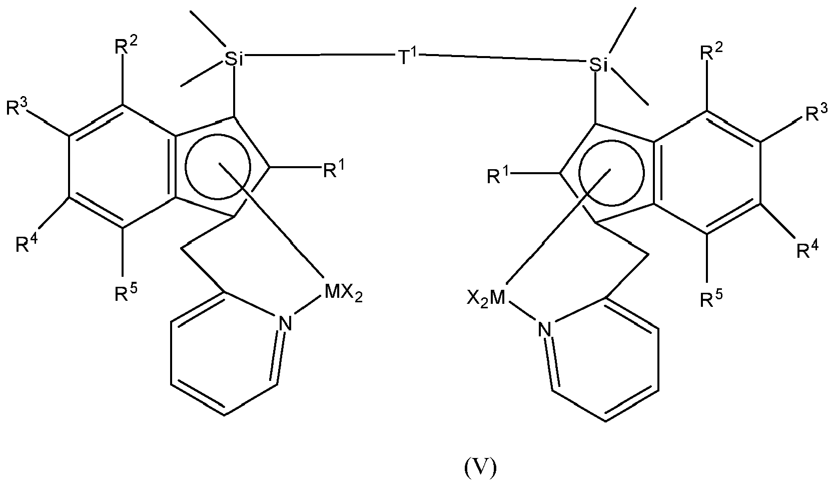 Wherein
R¹, R², R³, R⁴, R⁵, T¹, M, and X have been described above; preferably T1 is a C4-C8 alkylidene radical.

A further object of the present invention is a catalyst system comprising:
a) a complex of formula (I); preferably of formula (V);
b) an alumoxane or a compound capable of forming an alkyl chromocene cation; and optionally
c) an organo aluminum compound.

Alumoxanes used as component b) in the catalyst system according to the present invention can be obtained by reacting water with an organo-aluminium compound of formula HⱼAlU₃₋ⱼ or HⱼAl₂U₆-ⱼ, where the U substituents, same or different, are hydrogen atoms, halogen atoms, Cₗ-C₂ₒ-alkyl, C₃-C₂₀-cyclalkyl, C₆-C₂₀-aryl, C₇-C₂₀-alkylaryl or C₇-C₂₀-arylalkyl radicals, optionally containing silicon or germanium atoms, with the proviso that at least one U is different from halogen, and j ranges from 0 to 1, being also a non-integer number. In this reaction the molar ratio of Al/water is preferably comprised between 1:1 and 100:1.

The alumoxanes used in the catalyst system according to the invention are considered to be linear, branched or cyclic compounds containing at least one group of the type: 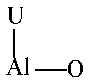 wherein the substituents U, same or different, are defined above.

In particular, alumoxanes of the formula: 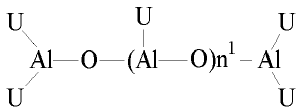 can be used in the case of linear compounds, wherein n¹ is 0 or an integer of from 1 to 40 and the substituents U are defined as above; or alumoxanes of the formula: 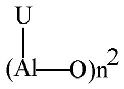 can be used in the case of cyclic compounds, wherein n² is an integer from 2 to 40 and the U substituents are defined as above.

Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Particularly interesting cocatalysts are those described in WO 99/21899 and in WO 01/21674 in which the alkyl and aryl groups have specific branched patterns.

Non-limiting examples of aluminium compounds that can be reacted with water to give suitable alumoxanes (b), described in WO 99/21899 and WO01/21674, are: tris(2,3,3-trimethyl-butyl)aluminium, tris(2,3-dimethyl-hexyl)aluminium, tris(2,3-dimethylbutyl)aluminium, tris(2,3-dimethyl-pentyl)aluminium, tris(2,3-dimethyl-heptyl)aluminium, tris(2-methyl-3-ethyl-pentyl)aluminium, tris(2-methyl-3-ethyl-hexyl)aluminium, tris(2-methyl-3-ethyl-heptyl)aluminium, tris(2-methyl-3-propyl-hexyl)aluminium, tris(2-ethyl-3-methylbutyl)aluminium, tris(2-ethyl-3-methyl-pentyl)aluminium, tris(2,3-diethyl-pentyl)aluminium, tris(2-propyl-3-methyl-butyl)aluminium, tris(2-isopropyl-3-methyl-butyl)aluminium, tris(2-isobutyl-3-methyl-pentyl)aluminium, tris(2,3,3-trimethyl-pentyl)aluminium, tris(2,3,3-trimethyl-hexyl)aluminium, tris(2-ethyl-3,3-dimethyl-butyl)aluminium, tris(2-ethyl-3,3-dimethyl-pentyl)aluminium, tris(2-isopropyl-3,3 -dimethyl-butyl)aluminium, tris(2-trimethylsilyl-propyl)aluminium, tris(2-methyl-3-phenyl-butyl)aluminium, tris(2-ethyl-3-phenyl-butyl)aluminium, tris(2,3-dimethyl-3-phenyl-butyl)aluminium, tris(2-phenyl-propyl)aluminium, tris[2-(4-fluorophenyl)-propyl]aluminium, tris[2-(4-chloro-phenyl)-propyl]aluminium, tris[2-(3-isopropyl-phenyl)-propyl]aluminium, tris(2-phenyl-butyl)aluminium, tris(3-methyl-2-phenyl-butyl)aluminium, tris(2-phenyl-pentyl)aluminium, tris[2-(pentafluorophenyl)-propyl]aluminium, tris[2,2-diphenylethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBA), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Non-limiting examples of compounds able to form an alkyl chromocene cation are compounds of formula D⁺E⁻, wherein D⁺ is a Bronsted acid, able to donate a proton and to react irreversibly with a substituent X of the chromocene of formula (I) and E⁻ is a compatible anion, which is able to stabilize the active catalytic species originating from the reaction of the two compounds, and which is sufficiently labile to be removed by an olefinic monomer. Preferably, the anion E⁻ comprises one or more boron atoms. More preferably, the anion E⁻ is an anion of the formula BAr₄⁽⁻⁾, wherein the substituents Ar which can be identical or different are aryl radicals such as phenyl, pentafluorophenyl or bis(trifluoromethyl)phenyl. Tetrakis-pentafluorophenyl borate is particularly preferred compound, as described in WO 91/02012. Moreover, compounds of formula B_{A}r3 can be conveniently used. Compounds of this type are described, for example, in the International patent application WO 92/00333. Other examples of compounds able to form an alkyl chromocene cation are compounds of formula BAr₃P wherein P is a substituted or unsubstituted pyrrol radical. These compounds are described in WO01/62764. Compounds containing boron atoms can be conveniently supported according to the description of DE-A-19962814 and DE-A-19962910. All these compounds containing boron atoms can be used in a molar ratio between boron and the metal of the chromocene comprised between about 1:1 and about 10:1; preferably 1:1 and 2.1; more preferably about 1:1.

Non limiting examples of compounds of formula D⁺E- are:
Triethylammoniumtetra(phenyl)borate,
Tributylammoniumtetra(phenyl)borate,
Trimethylammoniumtetra(tolyl)borate,
Tributylammoniumtetra(tolyl)borate,
Tributylammoniumtetra(pentafluorophenyl)borate,
Tributylammoniumtetra(pentafluorophenyl)aluminate,
Tripropylammoniumtetra(dimethylphenyl)borate,
Tributylammoniumtetra(trifluoromethylphenyl)borate,
Tributylammoniumtetra(4-fluorophenyl)borate,
N,N-Dimethylbenzylammonium-tetrakispentafluorophenylborate,
N,N-Dimethylhexylammonium-tetrakispentafluorophenylborate,
N,N-Dimethylaniliniumtetra(phenyl)borate,
N,N-Diethylaniliniumtetra(phenyl)borate,
N,N-Dimethylaniliniumtetrakis(pentafluorophenyl)borate,
N,N-Dimethylaniliniumtetrakis(pentafluorophenyl)aluminate,
N,N-Dimethylbenzylammonium-tetrakispentafluorophenylborate,
N,N-Dimethylhexylamonium-tetrakispentafluorophenylborate,
Di(propyl)ammoniumtetrakis(pentafluorophenyl)borate,
Di(cyclohexyl)ammoniumtetrakis(pentafluorophenyl)borate,
Triphenylphosphoniumtetrakis(phenyl)borate,
Triethylphosphoniumtetrakis(phenyl)borate,
Diphenylphosphoniumtetrakis(phenyl)borate,
Tri(methylphenyl)phosphoniumtetrakis(phenyl)borate,
Tri(dimethylphenyl)phosphoniumtetrakis(phenyl)borate,
Triphenylcarbeniumtetrakis(pentafluorophenyl)borate,
Triphenylcarbeniumtetrakis(pentafluorophenyl)aluminate,
Triphenylcarbeniumtetrakis(phenyl)aluminate,
Ferroceniumtetrakis(pentafluorophenyl)borate,
Ferroceniumtetrakis(pentafluorophenyl)aluminate.
Triphenylcarbeniumtetrakis(pentafluorophenyl)borate, and
N,N-Dimethylaniliniumtetrakis(pentafluorophenyl)borate.

Organic aluminum compounds used as compound c) are those of formula HⱼAlU₃₋ⱼ or HⱼAl₂U₆₋ⱼ as described above.

The catalysts system of the present invention can also be supported on an inert carrier. This is achieved by depositing the chromocene compound a) or the product of the reaction thereof with the component b), or the component b) and then the chromocene compound a) on an inert support. The support can be a porous solid such as talc, a sheet silicate, an inorganic oxide or a finely divided polymer powder (e.g. polyolefin). Suitable inorganic oxides may be found among the oxides of elements of groups 2, 3, 4, 5, 13, 14, 15 and 16 of the Periodic Table of the Elements. Examples of oxides preferred as supports include silicon dioxide, aluminum oxide, and also mixed oxides of the elements calcium, aluminum, silicon, magnesium or titanium and also corresponding oxide mixtures, magnesium halides, styrene/divinylbenzene copolymers, polyethylene or polypropylene. Other inorganic oxides which can be used alone or in combination with the abovementioned preferred oxidic supports are, for example, MgO, ZrO₂, TiO₂ or B₂O₃.

A suitable class of supports which can be used is that constituted by porous organic supports functionalized with groups having active hydrogen atoms. Particularly suitable are those in which the organic support is a partially crosslinked styrene polymer. Supports of this type are described in European application EP-633 272.

Another class of inert supports particularly suitable for use according to the invention is that of polyolefin porous prepolymers, particularly polyethylene.

A further suitable class of inert supports for use according to the invention is that of porous magnesium halides such as those described in International application WO 95/32995.

The support materials used preferably have a specific surface area in the range from 10 to 1 000 m²/g, a pore volume in the range from 0.1 to 5 ml/g and a mean particle size of from 1 to 500 µm. Preference is given to supports having a specific surface area in the range from 50 to 500 m²/g, a pore volume in the range from 0.5 to 3.5 ml/g and a mean particle size in the range from 5 to 350 µm. Particular preference is given to supports having a specific surface area in the range from 200 to 400 m²/g, a pore volume in the range from 0.8 to 3.0 ml/g and a mean particle size of from 10 to 300 µm.

The inorganic support can be subjected to a thermal treatment, e.g. to remove adsorbed water. Such a drying treatment is generally carried out at from 80 to 300°C, preferably from 100 to 200°C, with drying at from 100 to 200°C preferably being carried out under reduced pressure and/or a blanket of inert gas (e.g. nitrogen), or the inorganic support can be calcined at from 200 to 1 000°C to produce the desired structure of the solid and/or set the desired OH concentration on the surface. The support can also be treated chemically using customary desiccants such as metal alkyls, preferably aluminum alkyls, chlorosilanes or SiCl₄, or else methylaluminoxane. Appropriate treatment methods are described, for example, in WO 00/31090.

The inorganic support material can also be chemically modified. For example, treatment of silica gel with (NH₄)₂SiF₆ leads to fluorination of the silica gel surface, or treatment of silica gels with silanes containing nitrogen-, fluorine- or sulfur-containing groups leads to correspondingly modified silica gel surfaces.

Organic support materials such as finely divided polyolefin powders (e.g. polyethylene, polypropylene or polystyrene) can also be used and are preferably likewise freed of adhering moisture, solvent residues or other impurities by means of appropriate purification and drying operations before use. It is also possible to use functionalized polymer supports, e.g. supports based on polystyrene, via whose functional groups, for example ammonium or hydroxy groups, at least one of the catalyst components can be immobilized. The solid compound obtained by supporting the catalyst system object of the present invention on a carrier in combination with the further addition of the alkylaluminium compound either as such or prereacted with water if necessary, can be usefully employed in the gas-phase or slurry polymerization.

With the catalyst system of the present invention it is possible to polymerize alpha-olefins in high yield to obtain polymers having high molecular weight. Thus a further object of the present invention is a process for polymerizing one or more alpha olefins of formula CH₂=CHT wherein T is hydrogen or a C₁-C₂₀ alkyl radical comprising the step of contacting one or more of said alpha-olefins of formula CH₂=CHT under polymerization conditions in the presence of the catalyst system described above.

Preferred α-olefins are ethylene, propylene, 1-butene, 1-hexene, 1-octene.

The catalyst system of the present invention is particularly fit for the polymerization of ethylene or copolymerization of ethylene and propylene, 1-butene, 1-hexene and 1-octene. Thus a further object of the present invention is a process for polymerizing ethylene and optionally one or more alpha olefins selected from propylene, 1-butene, 1-hexene and 1-octene comprising the step of contacting ethylene and optionally said alpha-olefins under polymerization conditions in the presence of the catalyst system described above.

The process for the polymerization of olefins according to the invention can be carried out in the liquid phase in the presence or absence of an inert hydrocarbon solvent, such as in slurry, or in the gas phase. The hydrocarbon solvent can either be aromatic such as toluene, or aliphatic such as propane, hexane, heptane, isobutane or cyclohexane.

The polymerization temperature is generally comprised between -100°C and +200°C and, particularly between 10°C and +100°C. The polymerization pressure is generally comprised between 0,5 and 100 bar.

The lower the polymerization temperature, the higher are the resulting molecular weights of the polymers obtained.

A further object of the present invention is a ligand of formula (Ia) 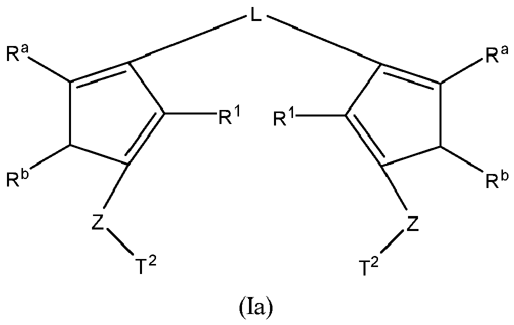 and its double bonds isomer, i.e. the isomer having the double bonds of the cyclopendiene ring in different positions;
wherein R¹, R^{a}, R^{b}, Z, T², and L have been described above
preferably the compound of formula (Ia) has formula (Va) 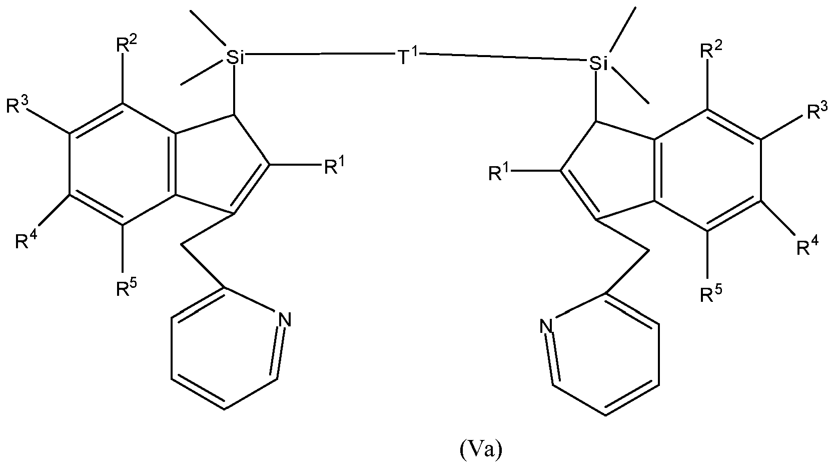 and its double bonds isomer, i.e. the isomer having the double bonds of the cyclopendiene ring in different positions;
wherein R¹, R², R³, R⁴, R⁵ and T¹ have been described above.

The following examples are given to illustrate and not to limit the invention.

### Examples:

Intrinsic viscosity η, which is the value of the viscosity number by extrapolation of polymer concentration to zero, was determined on an automatic Ubbelohde viskometer (Lauda PVS 1) at a concentration of 0.001 g/ml in decaline as a solvent and at a temperature of 135°C according to EN ISO 1628-1:1998.

The ¹H-NMR spectra were measured on a Bruker DRX 200 (¹H: 200.13 MHz). In ¹H-NMR spectra, the signal of the incompletely deuterated part of the solvent used served as internal standard. All signals were calibrated to the appropriate literature values.

The melting point of the polymers were measured by Differential Scanning Calorimctry (D.S.C.) on a heat flow DSC (TA-Instruments Q2000), according to the standard method (ISO 11357-3 (1999)). A weighted sample (5-6 mg) obtained from the polymerization was sealed into aluminum pans and heated to 200°C at 20 K/minute. The sample was kept at 200°C for 5 minutes to allow a complete melting of all the crystallites, then cooled to -10°C at 20°C/minute. After standing 2 minutes at -10°C, the sample was heated for the second time to 200°C at 20 K/min. In this second heating run the area of the peak was taken as enthalpy of fusion (ΔHf) and the maximum of the peak was taken as the melting point (Tm2).

The amount of comonomer and the data relating to the polymer structure have been measured by IR.

### Synthesis of pyridylmethylindene

### Synthesis of 2-(chloromethyl)pyridine hydrochloride

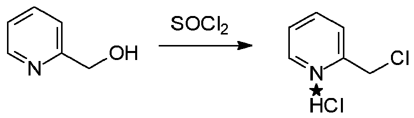

2-pyridinylmethanol (100 g, 0.92 mol) was added under stirring and cooling (0°C) to 300 ml (4.1 mol) of SOCl₂ during 2h. The solution obtained was refluxed for 1h. Then the excess of SOCl₂ was removed in vacuum and the solid residue was used in the next stage as it is. Yield 100%.

### Synthesis of pyridylmethylindene

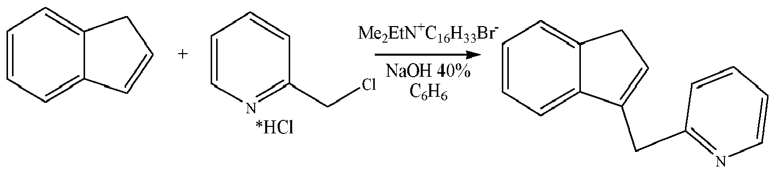

Freshly distilled indene (160.0 g, 1.38 mol), benzene (200 ml), 40% NaOH (400 ml) and N,N-dimethyl-N-ethyl-N-hexadecylammonium bromide (2g, 5mmol) were placed into 2000ml flask with argon atmosphere. 2-(chloromethyl)pyridine hydrochloride (obtained from 100g of 2-pyridinylmethanol as described above) was added by portions in 30 min with stirring at 0°C and mixture was stirred for 4h. The organic layer was isolated, washed with water, dried over MgSO₄ and evaporated. The residue was distilled in vacuum (125-135 °C/0.3-0.4 torr) to give 105 g of product (51% from started 2-pyridinylmethanol).

### Synthesis of 2-((1-(trimethylsilyl)-indenyl)-methyl)pyridin-CrCl₂ (C-1)

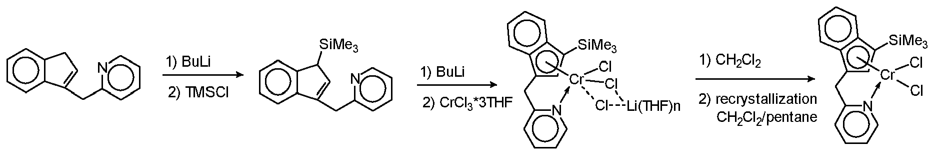

The pyridylmethylindene (mixture of all possible isomers, 120.0g, 0.579mol) was dissolved in 1200ml of Et₂O or MTBE. Resulting solution was cooled to 0°C and was treated with 2.5M n-butyllithium in hexanes (258 ml. 0.64 mol) for 1h under stirring. The resulting mixture was allowed to warm up to r.t. and stirred for additional 3-4h. Then the mixture was cooled again to 0°C and was treated with SiMe₃Cl (84.3 ml. 0.66 mol). The resulting mixture was allowed to warm to room temperature (r.t.) and then was stirred overnight.

The next day the mixture was treated with 2.5M n-butyllithium in hexanes (258 ml. 0.64 mol) for 1h under stirring and cooling (0°C). The resulting mixture was allowed to warm up to r.t. and was stirred 3h. Then the mixture was treated with THF (400ml), cooled again 0°C and was treated with 216.9g (0.579 mol) of CrCl₃*3THF (prepared according to J. Organomet. Chem. Volume 4, Issue 5, 1965, pp355-359 « π-Complexes of the transition metals: Reaction of p-tolylmagnesium bromide with chromium(III) chloride tetrahydrofuranate» The resulting mixture was allowed to warm to r.t. and then was stirred overnight.

The next day, the reaction mixture was refluxed for 1h and cooled to r.t. The green precipitate was filtered, washed twice by Et₂O or THF/hexane to give ≈ 230g of the crude product. It was dissolved in 900 ml of CH₂Cl₂, the solution was refluxed for 15 min, when cooled to r.t. and then was filtered through P3-filter from the white precipitate. The solution was concentrated to ≈ 300 ml and 600-700 ml of pentane was added within ~20min at vigorous stirring. The green crystalline precipitate was filtered, washed two times with pentane to give 176.5g (76%) of the product.

### Synthesis of 2-({1-[(6-{dimethyl[3-(2-pyridinytmethyl)-1H-inden-1-yl] silyl} hexyl)(dimethyl)silyl]-1H-inden-3-yl} methyl)pyridine

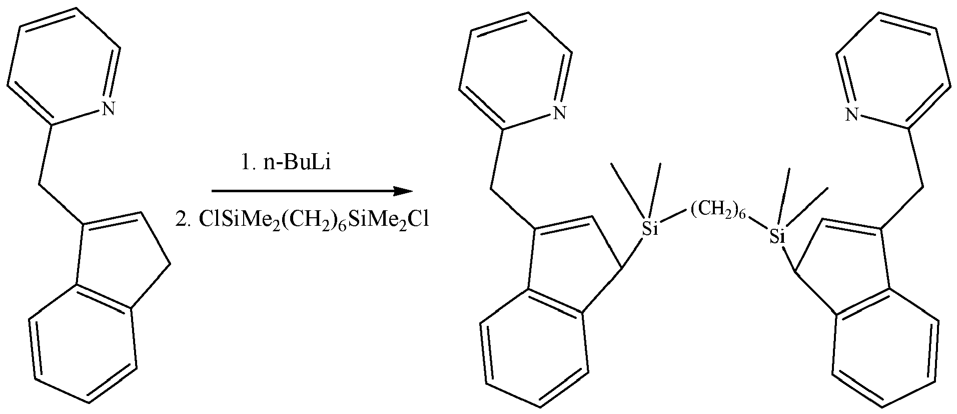

Solution of 2-(1*H*-inden-3-ylmethyl)pyridine (2.29g, 0.011 mol) in 30ml of Et₂O was cooled to -60°C and was treated with 2.5M n-butyllithium in hexanes (4.5 ml. 0.011 mol) in 5min under stirring. The resulting mixture was allowed to warm up to r.t. and stirred for additional 3h. Then the mixture was cooled again to -60°C and was quickly treated with CuCN (catalytic amount) and, after two minutes, chloro{6-[chloro(dimethyl)silyl]hexyl}dimethylsilane (1.5g, 0.0055 mol) has been added. The resulting mixture was stirred at the same temperature for additional 3h, was allowed to warm to r.t. and then was stirred overnight.

The next day the mixture was treated with water, organic layer was c9olelcted, diluted with benzene, dried with MgSO₄, passed through silica gel layer and evaporated. The residue was used without further purification.

### Yield 3.4g (about 100%).

NMR ¹H (CDCl₃): 8.62 (br.s, 2H); 7.57 (t, 2H); 7.47 (d, 2H); 7.41 (d, 2H); 7.29-7.15 (group of signals, 8H); 6.46 (s, 2H); 4.23 (s, 4H); 3.54 (s, 2H); 1.36-1.20 (group of signals, 8H); 0.53 (m, 4H); -0.02 (s, 6H); -0.07 (s, 6H).

### Synthesis of hexyl-1-6-dimethylsilyl[(3-(2-picolyl-indacenyl)-CrCl₂)]₂ (A-1)

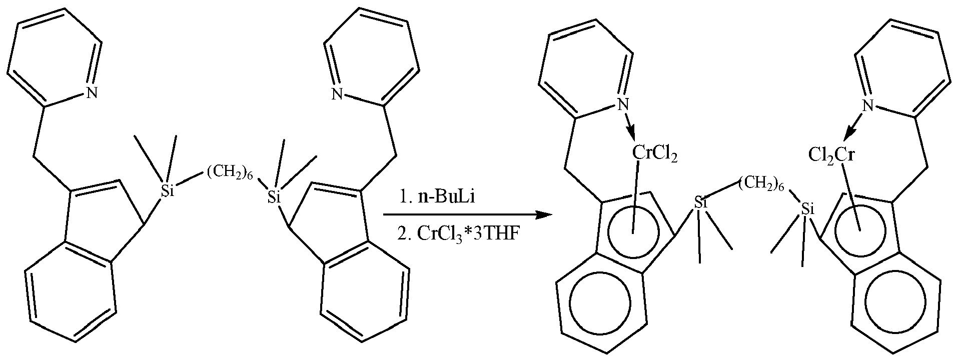

Solution of ligand (3.40g, 0.0055mol) in THF (30ml) was cooled to -60°C and was treated with 2.5M n-butyllithium in hexanes (4.4 ml. 0.011 mol) in 5min under stirring. The resulting mixture was allowed to warm up to r.t. and stirred for additional 3h. Then the mixture was cooled again to -60°C and was treated with CrCl₃*3THF (3.74g, 0.01mol). The resulting mixture was allowed to warm to r.t. and then was stirred overnight.

Next day, the reaction mixture was refluxed for 20min and cooled to room temperature. The green precipitate was filtered, washed twice by Et₂O, and then the crude product (3.0g) was recrystallized from mixture CH₂Cl₂/pentane (1/1) to give 1.5g (35%) of product as green powder.

### Example 1

### Catalyst preparation:

A 250 ml flask was flushed with Ar and charged with 2.9g of Grace XPO2326 silica. A solution of 65 mg of hexyl-1-6-dimethylsilyl[(3-(2-picolyl-indacenyl)-CrCl₂)]₂ in 3,2 ml MAO (30wt% in toluene) was prepared and stirred for 15 min. Subsequently 1,5 ml of toluene were added to the reaction mixture, which was than added dropwise to the stirred silica at 0°C. The reaction mixture was continuously stirred and allowed to warm up to 21 °C within 60 min. The ready catalyst was washed with 50 ml of pentane, filtrated and dried for 1h by continuously flowing Ar (0.2 bar).

### Polymerization:

The polymerization was carried out in a 11 autoclave, which had been flushed 3 times with Ar at 65°C. The reactor was charged with 150 mg of TiBA (50 wt%) and 400 ml of isobutane at 70°C. A mixture of ethylene/hexene (28.6: 1) was fed until the pressure of 26 bar-g was reached. Subsequently 60 mg of catalyst prepared above were injected. The temperature was kept constant at 70°C for 60 min. The reaction was stopped by venting all volatiles. The polymerization results are reported in table 1.

### Comparative example 1

### Catalyst preparation

The catalyst was prepared as in example 1 by using the same equivalent of chromium of compound C-1.

### Polymerization

The polymerization was carried out as for example 1. The polymerization results are reported in table 1.

**Table: 1**

| | Complex Loading µmol/g | Polymerization activity gpol/gcat | intr. Visc. [dl/g] | IR Density ~[g/cm³] | IR Hexene [%] | DSC Tm2 [°C] |
|---|---|---|---|---|---|---|
| comparative example 1 | 50 | 778 | 37.65 | 0.925 | <0,8 | 129.82 |
| Example 1 | 25 | 1867 | 57.05 | 0.9233 | <0, 8 | 129.49 |

The compound used in the catalyst system of example 1 gives rise to a polymerization activity higher than that one of the comparative example 1. It has to be noted that the chromium content of the complex of example 1 is the same of that one of example 2.

## Claims

1. Complex of formula (I) 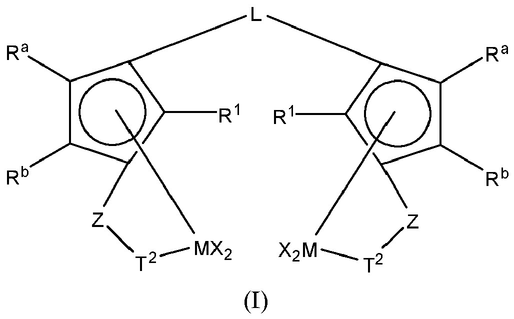 Wherein
R' equal to or different from each other, is a hydrogen atom or C₁-C₄₀ hydrocarbon radical optionally containing silicon atoms, germanium atoms or heteroatoms belonging to groups 15-16 of the Periodic Table of the Elements;
R^{a} and R^{b} equal to or different from each other, are hydrogen atoms or C₁-C₄₀ hydrocarbon radical optionally containing silicon atoms, germanium atoms or heteroatoms belonging to groups 15-16 of the Periodic Table of the Elements or R^{a} and R^{b} can be joined to form a from 4 to 7 membered ring, preferably a 5-6 membered ring that can be aliphatic or aromatic and can contain heteroatoms belonging to groups 15-16 of the Periodic Table of the Elements; said ring can contain one or more C₁-C₂₀ hydrocarbon radicals as substituents;
M is selected from titanium, zirconium, hafnium, vanadium, niobium, tantalum, chromium, molybdenum or tungsten;
X, equal to or different from each other, are a hydrogen atom, a halogen atom, a R, OR, OSO₂CF₃, OCOR, SR, NR₂ or PR₂ group wherein R is a linear or branched, cyclic or acyclic, C₁-C₄₀-alkyl, C₂-C₄₀ alkenyl, C₂-C₄₀ alkynyl, C₆-C₄₀-aryl, C₇-C₄₀-alkylaryl or C₇-C₄₀-arylalkyl radical; optionally containing heteroatoms belonging to groups 13-17 of the Periodic Table of the Elements; or two X groups can be joined together to form a group OR' O wherein R' is a C₁-C₂₀-alkylidene, C₆-C₂₀-arylidene, C₇-C₂₀-alkylarylidene, or C₇-C₂₀-arylalkylidene radical;
Z is a divalent bridging group selected from C₁-C₂₀ alkylidene, C₃-C₂₀ cycloalkylidene, C₆-C₂₀ arylidene, C₇-C₂₀ alkylarylidene, or a C₇-C₂₀ arylalkylidene radicals, optionally containing heteroatoms belonging to groups 13-17 of the Periodic Table of the Elements, or it is a silylidene radical containing up to 5 silicon atoms; Z can also be an aliphatic or aromatic 5-7 membered ring condensed with T²;
T² is a radical comprising at least one uncharged donor containing at least one atom of group 15 or 16 of the Periodic Table;
L is a divalent bridging group selected from C₁-C₄₀ alkylidene, C₃-C₄₀ cycloalkylidene, C₆-C₄₀ arylidene, C₇-C₄₀ alkylarylidene, or a C₇-C₄₀ arylalkylidene radicals, optionally containing heteroatoms belonging to groups 13-17 of the Periodic Table of the Elements,

2. The complex according to claim 1 wherein preferably L has formula (III): 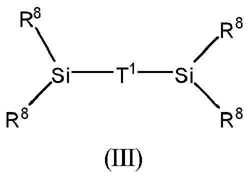 Wherein:
R⁸, equal to or different from each other, are hydrogen atoms or C₁-C₁₀ hydrocarbon radical;
T¹ is a divalent bridging group selected from C₁-C₂₀ alkylidene; C₃-C₂₀ cycloalkylidene, C₆-C₂₀ arylidene, C₇-C₂₀ alkylarylidene, or a C₇-C₂₀ arylalkylidene radical.

3. The complex according to claims 1 or 2 having formula (IV): 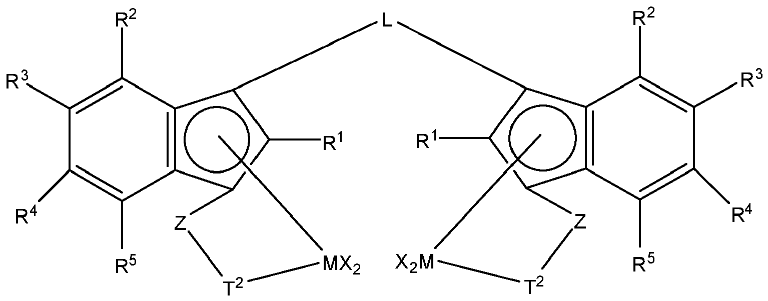 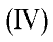 Wherein:
M, X, R¹, Z, L and T² have been described in claim 1 or 2;
R², R³, R⁴ and R⁵, equal to or different from each other, are hydrogen atoms or C₁-C₄₀ hydrocarbon radical optionally containing silicon atoms, germanium atoms or heteroatoms belonging to groups 15-16 of the Periodic Table of the Elements or two groups among R², R³,
R⁴ and R⁵ can also be joined to form a from 4 to 7 membered ring; said ring can contain one or more C₁-C₁₀ hydrocarbon radicals as substituents.

4. The complex according to anyone of claims 1-3 having formula (V) 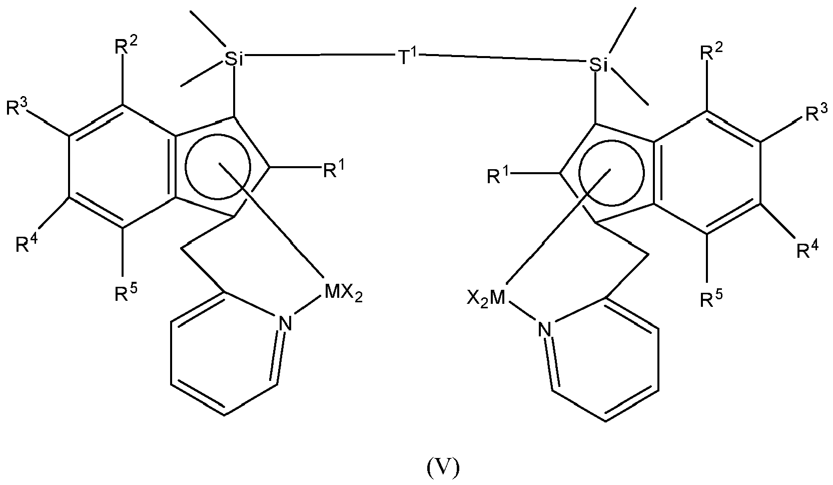 Wherein
R¹,R², R³, R⁴, R⁵, T¹, M, and X have been described in claims 1-3;

5. A catalyst system comprising:
a) a complex of formula (I) as described in claim 1-4;
b) an alumoxane or a compound capable of forming an alkyl chromocene cation; and optionally
c) an organo aluminum compound.

6. The catalyst system according to claim 5 wherein the complex has formula (V) as described in claim 4.

7. The catalyst system according to claims 5 or 6 being supported on an inert carrier.

8. A ligand of formula (Ia) 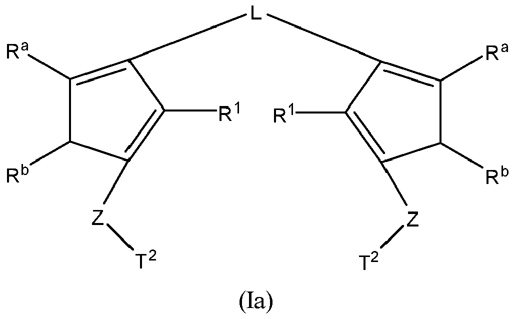 and its double bonds isomer;
wherein R¹, R^{a}, R^{b}, Z, T², and L have been described in claims 1-3.

9. The ligand of claim 8 having formula (Va) 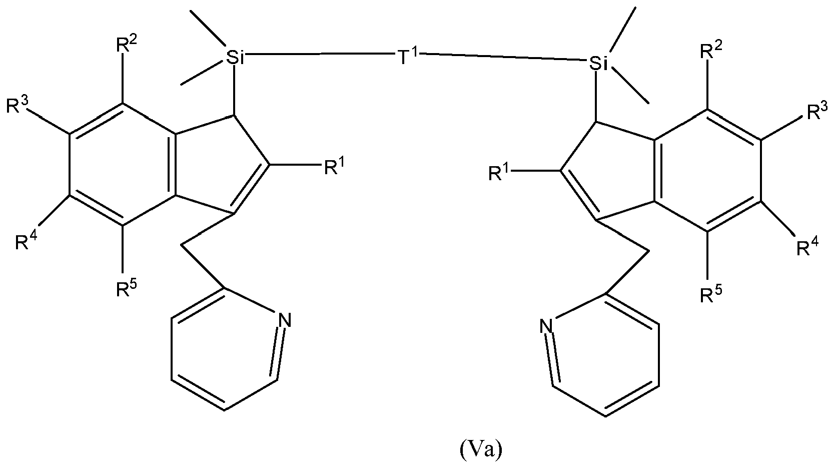 and its double bonds isomer;
wherein R¹, R², R³, R⁴, R⁵ and T¹ have been described in claim 5.

10. A polymerization process of one or more alpha olefins of formula CH₂=CHT wherein T is hydrogen or a C₁-C₂₀ alkyl radical comprising the step of contacting one or more of said alpha-olefins of formula CH₂=CHT under polymerization conditions in the presence of the catalyst system described in claims 5-7.

11. The process according to claim 10 for polymerizing ethylene and optionally one or more alpha olefins selected from propylene, 1-butene, 1-hexene and 1-octene comprising the step of contacting ethylene and optionally said alpha-olefins under polymerization conditions in the presence of the catalyst system described in claims 5-7.
